(19) Europäisches Patentamt
European Patent Office
Office européen des brevets

(11) EP 1 388 571 A1

(12) EUROPÄISCHE PATENTANMELDUNG

(43) Veröffentlichungstag:
**11.02.2004 Patentblatt 2004/07**

(51) Int Cl.[7]: **C08L 83/04**, D06M 13/46, D06M 15/643, D06M 15/647

(21) Anmeldenummer: **02017823.2**

(22) Anmeldetag: **08.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **Ciba Spezialitätenchemie Pfersee GmbH
86462 Langweid a.Lech (DE)**

(72) Erfinder:
- **Lindmair, Gabriele
86405 Meitingen (DE)**
- **Chrobaczek, Harald, Dr.
86153 Augsburg (DE)**
- **Tschida, Günther
86830 Schwabmünchen (DE)**

(54) **Polyorganosiloxanzusammensetzung enthaltend quaternäre Ammoniumgruppen**

(57) Beschrieben werden Zusammensetzungen, welche sich durch Umsetzung von tetrafunktionellen Silanen mit Siloxanen erhalten lassen. Die Zusammensetzungen enthalten Polysiloxane mit quaternären Stickstoffatomen. Sie können vor allem in Form wässriger Dispersionen zur Behandlung von Fasermaterialien, insbesondere textilen Flächengebilden, verwendet werden. Den Textilien wird dadurch angenehm weicher Griff bei guter Permanenz des Effektniveaus verliehen.

EP 1 388 571 A1

## Beschreibung

Die Erfindung betrifft Zusammensetzungen, welche Polyorganosiloxane mit mindestens einem quaternären Stickstoffatom enthalten. Sie betrifft ferner wäßrige Dispersionen, welche solche Zusammensetzungen enthalten und die Verwendung dieser wäßrigen Dispersionen.

Es ist bekannt, Fasermaterialien, insbesondere textile Flächengebilde, mit Polyorganosiloxanen zu behandeln. Den Fasermaterialien lassen sich dadurch vorteilhafte Eigenschaften wie z.B. angenehm weicher Griff verleihen. Polyorganosiloxane, welche quaternäre Stickstoffatome enthalten und ihre Verwendung zur Behandlung von Fasermaterialien sind ebenfalls bekannt, beispielsweise aus der DE-A 196 52 524 und der WO 99/32539. Ferner beschreiben die DE-A 100 36 533, die DE-A 100 36 677, die DE-A 100 36 678, die DE-A 100 36 693 und die DE-A 100 36 694 ebenfalls Polysiloxane, welche positiv geladene Stickstoffatome enthalten. Die US 4 833 225 und die US 4 533 714 beschreiben Polysiloxane, welche innerhalb der Polysiloxankette Einheiten mit quaternären Stickstoffatomen enthalten und die Eignung dieser Polysiloxane für kosmetische Zwecke. Die Verwendung für Behandlung von Fasermaterialien wie z.B. Textilien wird nicht erwähnt. Die Produkte gemäß dieser beiden US-Schriften enthalten keine Seitenketten mit Stickstoffatomen.

Die WO 01/41720, WO 01/41721, die EP-A 17 121 und die EP-A 282 720 beschreiben Polysiloxane für kosmetische Einsatzzwecke. Die Polysiloxane enthalten quaternäre Stickstoffatome, aber keine an Siliciumatome gebundenen Seitenketten, welche Stickstoffatome enthalten.

Die EP-A 294 642 beschreibt ebenfalls Polysiloxane mit quaternären Stickstoffatomen an den Enden der Polysiloxankette für kosmetische Zwecke. Die dort genannten Polysiloxane enthalten keine Seitenketten mit Stickstoffatomen.

Es hat sich gezeigt, dass die in den genannten Schriften beschriebenen Produkte bei Verwendung zur Behandlung von Textilien neben Vorteilen auch Nachteile aufweisen, z.B. bezüglich nicht optimal weichen Eigenschaften damit ausgerüsteter Textilien. Ferner lässt vielfach die Permanenz der Effekte auf den ausgerüsteten Textilien zu wünschen übrig. Insbesondere bei Behandlung der ausgerüsteten Textilien mit wässrigen Systemen, welche oberflächenaktive Produkte enthalten, tritt vielfach der Nachteil auf, dass Teile der Ausrüstung ausgewaschen werden. Die Folge ist eine Verschlechterung des Effektniveaus der Ausrüstung und/oder der Qualität des Textils.

Die Aufgabe der vorliegenden Erfindung bestand darin, Polyorganosiloxane enthaltende Zusammensetzungen zur Verfügung zu stellen, welche die oben genannten Nachteile nicht aufweisen, welche sich in Form wässriger Dispersionen ausgezeichnet zur Behandlung von Fasermaterialien, insbesondere textilen Flächengebilden, eignen und dabei den ausgerüsteten Textilien ausgeprägte Weichheit bei hoher Permanenz der Ausrüstungseffekte verleihen, insbesondere was die hydrophilen/hydrophoben Eigenschaften und die Weichheit der ausgerüsteten Textilien betrifft.

Die Aufgabe wurde gelöst durch eine Zusammensetzung, die herstellbar ist durch Umsetzung eines Silans der Formel (I)

$$(R^1O)_3Si\text{-}Z \qquad (I)$$

oder eines Gemischs solcher Silane
mit einem offenkettigen Siloxan der Formel (IIa)

$$Y_3Si\text{-}O\text{-}[Si(R)(X)\text{-}O]_a\text{-}[Si(R)_2\text{-}O]_b\text{-}[Si(R)(D)\text{-}O]_r\text{-}Si\,Y_3 \qquad (IIa)$$

wobei gegebenenfalls bei der Umsetzung zusätzlich ein cyclisches Siloxan der Formel (IIb) verwendet wird

$$[Si(R)_2\text{-}O]_z \qquad (IIb)$$

wobei z für eine Zahl von 3 bis 8, vorzugsweise für 3 oder 4 steht,
oder einem Gemisch solcher Siloxane der Formel (IIa) und gegebenenfalls der Formel (IIb) wobei die einzelnen Einheiten -Si(R)(X)-O- und -Si(R)(D)-O- und
- $Si(R)_2$-O- beliebig über die Siloxankette des Siloxans der Formel (IIa) verteilt sein können,
wobei a eine Zahl von 0 bis 500 ist,

wobei b eine Zahl von 0 bis 2000 ist,
wobei die Summe a + b eine Zahl von 1 bis 2000 ist,
wobei l eine Zahl von 0 bis 0,1•b ist,
wobei die Gesamtzahl der in den verwendeten Siloxanen der Formel (IIa) und der Formel (IIb) anwesenden Einheiten -Si(R)(X)-O- und $Si(R)_2$-O- das 10-fache bis 1000-fache der Gesamtzahl der in den verwendeten Siloxanen der Formel (IIa) anwesenden Einheiten $Y_3$ Si-O- beträgt,
wobei D ein Rest der Formel

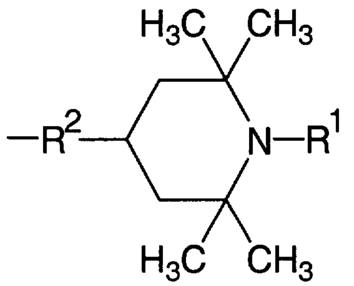

ist,
worin alle anwesenden Reste $R^1$ unabhängig voneinander für Wasserstoff oder einen Alkylrest mit 1 bis 8 Kohlenstoffatomen, vorzugsweise für $-CH_3$ oder $-CH_2-CH_3$, stehen,
wobei alle anwesenden Reste Z unabhängig voneinander für einen Rest der Formel (III) oder der Formel (IV)

$$-R^2 \left[ -L-\left( CH_2 \right)_c \right]_d NR^4_2 \qquad \text{(III)}$$

$$-R^2 \left[ -L-\left( CH_2 \right)_c \right]_d \overset{\oplus}{N}(R^5)_3 \qquad \text{(IV)}$$

stehen,
worin alle Reste $R^4$ unabhängig voneinander für Wasserstoff oder einen linearen oder verzweigten Alkylrest mit 1 bis 18 Kohlenstoffatomen stehen,
alle Reste $R^5$ unabhängig voneinander für einen linearen oder verzweigten Alkylrest mit 1 bis 18 Kohlenstoffatomen stehen,
c für eine Zahl von 2 bis 6 steht,
d für 0, 1 oder 2 steht,
wobei alle anwesenden zweiwertigen Reste L unabhängig voneinander für $-NR^4$- oder für

$$-\overset{\oplus}{N}(R^5)_2-$$

stehen,
worin alle Reste $R^2$ unabhängig voneinander für einen linearen oder verzweigten Alkylenrest mit 2 bis 6 Kohlenstoffatomen stehen, worin alle anwesenden Reste R unabhängig voneinander für einen Alkylrest mit 1 bis 4 Kohlenstoffatomen, vorzugsweise für $-CH_3$ stehen,
worin alle anwesenden Reste X für einen Rest der Formel (V) stehen,

$$-R^2 \left( OCHR^6 - CHR^7 \right)_e OR^4 \qquad (V)$$

worin $R^2$ und $R^4$ die oben genannten Bedeutungen besitzen,
e eine Zahl von 2 bis 25 ist,
wobei in jeder Einheit $-OCHR^6-CHR^7-$ einer der Reste $R^6$ und $R^7$ für Wasserstoff und der andere für Wasserstoff oder eine Methylgruppe steht,
worin alle Reste Y unabhängig voneinander für R, Z oder für einen Rest der Formel (VI), der Formel (VII), der Formel (VIII) oder der Formel (IX) stehen

$$-R^2-CH(OR^1)-R \qquad (VI)$$

$$-R^2-COOH \qquad (VII)$$

$$-R^2-O-CH_2-B \qquad (VIII)$$

$$-R^2-O-CH_2-CH(OH)\left( CH_2-\overset{\oplus}{N}(R^5)_2 \right)_t (CH_2)_k-\overset{\oplus}{N}(R^5)_3 \qquad (IX)$$

worin B der einwertige, von Ethylenoxid abgeleitete cyclische Rest oder ein Rest der Formel $-CH_2-CH_2-OH$ oder der Formel $-CH(OH)-CH_3$ ist,
wobei t 0 oder 1 ist und k den Wert 1 besitzt, wenn t = 0 ist, und k für eine Zahl von 2 bis 6 steht, wenn t = 1 ist,
wobei für den Fall, dass weder in dem Silan der Formel (I) noch in dem Siloxan der Formel (II) ein quaternäres Stickstoffatom anwesend ist, im Anschluß an die Umsetzung eine Quaternisierungsreaktion durchgeführt wird, bei der mindestens eines der anwesenden Stickstoffatome quaternisiert wird,
wobei die Gegenionen zu den positiv geladenen Stickstoffatomen ausgewählt sind aus Chloridanionen, Alkylsulfatanionen, Alkylsulfonatanionen, Carboxylatanionen, Benzolsulfonatanionen und Toluolsulfonatanionen,
wobei gegebenenfalls nach Beendigung der Umsetzung das erhaltene Produktgemisch durch Zugabe einer Säure auf einen pH-Wert von weniger als 7 eingestellt wird.

Es hat sich überraschenderweise gezeigt, dass durch diese Zusammensetzungen die aus dem Stand der Technik bekannten, oben aufgeführten Nachteile beseitigt oder zumindest abgeschwächt werden können. Werden Fasermaterialien, insbesondere textile Flächengebilde in Form von Geweben oder Maschenware, mit erfindungsgemäßen Zusammensetzungen behandelt, so lassen sich ausgezeichnete Effekte bezüglich angenehm weichem Griff und innerer Weichheit der Textilien erzielen. Die Permanenz dieser Effekte und die Permanenz der durch die Behandlung erzielten hydrophilen/hydrophoben Eigenschaften der Textilien ist hoch, das heißt, das Effektniveau verschlechtert sich nach Waschvorgängen nicht in einem unerwünschten Ausmaß. Für diese Behandlung von Textilien werden erfindungsgemäße Zusammensetzungen vorzugsweise in Form wässriger Dispersionen eingesetzt.

Es wird angenommen, dass erfindungsgemäße Zusammensetzungen Polyorganosiloxane enthalten, in denen innerhalb der Polymerkette ein oder mehrere Siliciumatome vorliegen, an die sowohl ein Rest Z als auch ein Rest $OR^1$ gebunden ist, d.h. dass innerhalb der Polymerkette eine oder mehrere Einheiten der Formel

$$Si(OR^1)(Z)-O-$$

anwesend sind.

Diese Polysiloxane sind wegen der Anwesenheit einer oder mehrerer Gruppen der Formel $OR^1$ einer Vernetzungsreaktion zugänglich, gegebenenfalls in Anwesenheit von Wasser, um $OR^1$-Gruppen zu hydrolysieren, wenn in diesen Gruppen $R^1$ nicht für Wasserstoff steht. Die Vernetzung kann über eine Umsetzung mit Polysiloxanen ("H-Siloxanen") durchgeführt werden, die Si-H-Bindungen enthalten. Es kann gegebenenfalls von Vorteil sein, diese Umsetzung nicht mit den erfindungsgemäßen Zusammensetzungen als solchen oder mit deren wässrigen Dispersionen

durchzuführen, sondern erst nachdem sie auf textile Flächengebilde wie z.B. Gewebe aufgebracht worden sind. Hierzu kann also ein Gewebe mit wässriger Dispersion von erfindungsgemäßen Zusammensetzungen nach üblichen Methoden ausgerüstet werden, z.B. mittels Foulard, und dann mit einem H-Siloxan behandelt werden.
Durch die beschriebene Vernetzungsreaktion lässt sich vielfach eine weitere Erhöhung der Permanenz der Ausrüstungseffekte erzielen.

Vorzugsweise werden erfindungsgemäße Zusammensetzungen in Form wässriger Dispersionen für die Behandlung der Fasermaterialien eingesetzt. Deren Applikation auf Textilien kann nach allgemein bekannten Verfahren zur Textilausrüstung bzw. -veredlung vor dem Konfektionieren erfolgen, z.B. mittels eines Foulardprozesses unter bekannten Bedingungen, was Flottenkonzentration und Trocknungszeit sowie -temperatur betrifft. Gegebenenfalls kann sich eine weitere Temperaturbehandlung (Kondensation) bei erhöhter Temperatur der getrockneten Textilien anschließen, vor allem dann, wenn es sich bei den Textilien um Baumwollartikel handelt und wenn die wässrigen Dispersionen neben erfindungsgemäßen Zusammensetzungen noch Cellulosevernetzer enthalten. Diese Kondensation lässt sich nach bekannten Verfahren durchführen. Die Fasermaterialien sind vorzugsweise textile Gewebe oder Maschenware. Sie können beispielsweise aus Cellulosefasern wie Baumwolle oder aus Mischungen von Cellulose- und Polyesterfasern oder aus Polyamidfasern bestehen und zur Herstellung von Bekleidungsartikeln dienen. Die wässrigen Dispersionen, welche zur Behandlung der Fasermaterialien verwendet werden, können neben erfindungsgemäßen Zusammensetzungen noch weitere Produkte enthalten, wie sie für die Textilausrüstung bzw. -veredlung bekannt sind. In Frage können hierzu Wachse in dispergierter Form, fluorhaltige Polymere, Cellulosevernetzer und Flammschutzmittel kommen. Ferner können auch zusätzlich weitere Polyorganosiloxane den wässrigen Dispersionen erfindungsgemäßer Zusammensetzungen hinzugefügt werden, z.B. $\alpha$, $\omega$-Dihydroxypolydimethylsiloxane, Polydimethylsiloxane oder aminofunktionelle Polyorganosiloxane. Vertreter dieser genannten Polysiloxane sind aus dem Stand der Technik bekannt. Werden neben erfindungsgemäßen Zusammensetzungen noch weitere Polysiloxane eingesetzt, so sollten die aus erfindungsgemäßen Zusammensetzungen stammenden Polysiloxane überwiegen, d.h. mehr als 50 Gew% aller Polysiloxane in der Dispersion ausmachen, also etwa 51 bis 95 Gew%, bezogen auf alle anwesenden Polyorganosiloxane.
Die wässrigen Dispersionen erfindungsgemäßer Polyorganosiloxane enthalten einen Dispergator oder ein Gemisch von Dispergatoren. Diese können aus bekannten handelsüblichen Produkten ausgewählt werden, die gemäß Stand der Technik in Silikonemulsionen eingesetzt werden. Gut geeignet als Dispergatoren sind nichtionogene Produkte wie ethoxilierte Alkohole, ethoxilierte Fettamine und ethoxilierte Fettsäuren, oder kationaktive Produkte wie quaternäre Ammoniumsalze. Die Konzentration an erfindungsgemäßen Zusammensetzungen und an Dispergatoren in den wäßrigen Dispersionen können in dem aus dem Stand der Technik bekannten Bereich liegen, z.B. kann die Konzentration des in erfindungsgemäßen Zusammensetzungen vorliegenden Polysiloxangemischs im Bereich von 5 bis 40 Gew.%, bezogen auf Gesamtdispersion, liegen.
Die wäßrigen Dispersionen lassen sich nach üblichen Methoden zur Herstellung von Silikonemulsionen durch Dispergierung erfindungsgemäßer Zusammensetzungen in Wasser erhalten.

In den Polyorganosiloxanen, die in erfindungsgemäßen Zusammensetzungen enthalten sind, muß im Durchschnitt pro Molekül mindestens ein quaternäres Stickstoffatom vorliegen. Darunter ist ein Stickstoffatom zu verstehen, das eine positive Ladung trägt und an das 4 Kohlenstoffatome gebunden sind. Es können natürlich auch mehrere quaternäre Stickstoffatome pro Molekül anwesend sein. Die obige Aussage "im Durchschnitt pro Molekül" bedeutet, dass wegen der Gegebenheiten bei Polymersynthesen zwar einzelne Moleküle vorliegen können, die keine quaternären Stickstoffatome enthalten. Jedoch ist deren Zahl im Vergleich zur Gesamtzahl der Polysiloxanmoleküle gering, d. h. kleiner als 10 % dieser Gesamtzahl. 90 bis 100 % aller Polysiloxanmoleküle enthalten ein oder mehrere quaternäre Stickstoffatome, im Durchschnitt enthält jedes Polysiloxanmolekül mindestens ein quaternäres Stickstoffatom. Dies lässt sich erreichen durch Verwendung entsprechender Mengen an Ausgangsverbindungen bei der Herstellung erfindungsgemäßer Zusammensetzungen bzw. an Produkten, die zur nachträglichen Quaternierung verwendet werden.
Die Anwesenheit quaternärer Stickstoffatome in den Polyorganosiloxanen, welche in erfindungsgemäßen Zusammensetzungen enthalten sind, lässt sich auf zwei unterschiedlichen Wegen erreichen. Entweder werden bei der Herstellung der Zusammensetzungen bereits solche Produkte der Formel (I) und/oder der Formel (IIa) verwendet, die ein oder mehrere quaternäre Stickstoffatome enthalten, oder es wird nach der Umsetzung des Silans der Formel (I) mit dem Siloxan der Formel (IIa) eine Quaternisierungsreaktion durchgeführt. Ausgangsprodukte mit mindestens einem quaternären Stickstoffatom sind beispielsweise solche, bei denen der Rest Z in Formel (I) ein oder mehrere quaternäre Stickstoffatome enthält, also ein Rest der Formel (IV) ist oder ein Rest der Formel (III), bei dem mindestens ein Rest L für eine Einheit

$$\overset{\oplus}{-N}(R^5)_2-$$

steht. Ausgangsprodukte der Formel (IIa) mit mindestens einem quaternären Stickstoffatom sind beispielsweise Verbindungen der Formel (IIa), bei denen mindestens einer der Reste Y für einen Rest Z steht, der mindestens ein quaternäres Stickstoffatom enthält oder bei denen mindestens einer der Reste Y ein Rest der Formel (IX) ist.
Enthält weder die Ausgangsverbindung der Formel (I) noch die der Formel (IIa) ein quaternäres Stickstoffatom, so muß nach der Umsetzung der Verbindung der Formel (I) mit der Verbindung der Formel (IIa) eine Quaternisierungsreaktion durchgeführt werden. Diese kann nach allgemein bekannten Verfahren zur Herstellung quaternärer Ammoniumverbindungen durch Umsetzung der entsprechenden Aminogruppe mit einem Alkylierungsmittel erfolgen.

Erfindungsgemäße Zusammensetzungen enthalten Polysiloxane mit einem oder mehreren quaternisierten Stickstoffatomen, nämlich positiv geladenen Stickstoffatomen, an die jeweils 4 Kohlenstoffatome gebunden sind. Die Gegenionen, also die zur Ladungskompensation erforderlichen Anionen, sind für alle anwesenden quaternären Stickstoffatome ausgewählt aus Chloridanionen, Alkylsulfatanionen, Alkylsulfonatanionen, Carboxylatanionen, Benzolsulfonatanionen und Toluolsulfonatanionen. Die Einführung dieser Anionen kann dadurch erfolgen, dass man bei der Herstellung der erfindungsgemäßen Zusammensetzungen die Quaternisierung der Stickstoffatome unter Verwendung von Alkylchloriden, Dialkylsulfaten, Carbonsäureafkylestern, Alkylsulfonsäurealkylestern, Benzolsulfonsäurealkylestern oder Toluolsulfonsäurealkylestern durchführt. Als Alkylsulfatanionen kommen insbesondere solche in Betracht, deren Alkylgruppe 1 bis 4 Kohlenstoffatome enthält. Geeignete Carboxylatanionen sind z.B. solche der Formel $R^8\text{-}COO^{\ominus}$, worin $R^8$ für einen Alkylrest mit 1 bis 8 Kohlenstoffatomen steht.

Besonders gut geeignet und daher bevorzugt als Anionen sind Benzolsulfonat- und Toluolsulfonatanionen. Das Toluolsulfonat kann hierbei das o-, m- oder p-Isomere oder ein Gemisch dieser Isomeren sein.
An Stelle einer einzigen Art des Anions können erfindungsgemäße Zusammensetzungen auch Gemische von Anionen der genannten Art enthalten.
Sollen für die Herstellung erfindungsgemäßer Zusammensetzungen als Ausgangsstoffe solche Verbindungen der Formel (I) und (IIa) verwendet werden, die bereits ein oder mehrere quaternäre Stickstoffatome enthalten, so sind entweder solche Verbindungen zu wählen, die bereits Anionen aus den oben genannten Gruppen enthalten, oder es müssen die vorliegenden Anionen anderer Art durch Anionen der genannten Gruppen ersetzt werden.

Zur Herstellung erfindungsgemäßer Zusammensetzungen wird ein Silan der Formel (I) oder ein Gemisch solcher Silane

$$(R^1O)_3Si\text{-}Z \qquad (I)$$

mit einem offenkettigen Siloxan der Formel (IIa)

$$Y_3Si\text{-}O-[Si(R)(X)\text{-}O]_a-[Si(R)_2\text{-}O]_b-[Si(R)(D)\text{-}O]_l-Si\,Y_3 \qquad (IIa)$$

oder einem Gemisch solcher Siloxane umgesetzt.

Bei der Umsetzung der Silane der Formel (I) mit Siloxanen der Formel (IIa) kann gegebenenfalls zusätzlich noch ein cyclisches Siloxan der Formel (IIb)

$$[Si(R)_2\text{-}O]_z \qquad (IIb)$$

an der Umsetzung beteiligt sein. Hierbei bedeutet z eine Zahl von 3 bis 8. Vorzugsweise besitzt z den Wert 3 oder 4. Solche cyclischen Siloxane sind handelsübliche Produkte. Besonders gut geeignet als Siloxan der Formel (IIb) sind cyclische Dimethylsiloxane, bei denen R für $CH_3$ steht und z den Wert 3 oder 4 hat, also Hexamethylcyclotrisiloxan oder Octamethylcyclotetrasiloxan. Die Reste R besitzen in Formel (IIb) die gleiche Bedeutung wie in Formel (IIa).
Gegebenenfalls muß sogar bei der Umsetzung des Silans der Formel (I) mit Siloxan der Formel (IIa) zusätzlich ein cyclisches Siloxan der Formel (IIb) mitverwendet werden, um die erforderliche Kettenlänge bei der Umsetzung zu erreichen. Ob die zusätzliche Verwendung des Siloxans der Formel (IIb) fakultativ oder obligatorisch ist, hängt von den Werten für a und b in den Siloxanen der Formel (IIa) ab. Dies wird unten näher erläutert.
Für die Umsetzung der Silane der Formel (I) mit Siloxanen der Formel (IIa) und gegebenenfalls zusätzlich Siloxanen der Formel (IIb) können Gemische mehrerer Silane der Formel (I) verwendet werden. Die verwendeten Siloxane können Gemische aus einem oder mehreren Siloxanen der Formel (IIa) und gegebenenfalls zusätzlich einem oder mehreren Siloxanen der Formel (IIb) sein.

In Formel (I) stehen alle Reste $R^1$ unabhängig voneinander für Wasserstoff oder für einen Alkylrest mit 1 bis

8 Kohlenstoffatomen, vorzugsweise für eine Methyl- oder eine Ethylgruppe.

In den Verbindungen der Formel (I) stehen alle Reste Z unabhängig voneinander für einen Rest der Formel (III) oder der Formel (IV),

$$-R^2 \left[ L \left( CH_2 \right)_c \right]_d NR^4_2 \qquad \text{(III)}$$

$$-R^2 \left[ L \left( CH_2 \right)_c \right]_d \overset{\oplus}{N}(R^5)_3 \qquad \text{(IV)}$$

worin alle Reste $R^4$ unabhängig voneinander für Wasserstoff oder einen linearen oder verzweigten Alkylrest mit 1 bis 18 Kohlenstoffatomen stehen,
alle Reste $R^5$ unabhängig voneinander für einen linearen oder verzweigten Alkylrest mit 1 bis 18 Kohlenstoffatomen stehen,
alle Reste $R^2$ unabhängig voneinander für einen linearen oder verzweigten Alkylenrest mit 2 bis 6 Kohlenstoffatomen stehen,
c für eine Zahl von 2 bis 6 steht,
d für 0, 1 oder 2 steht,
wobei alle anwesenden zweiwertigen Reste L unabhängig voneinander für $-NR^4-$ oder für

$$-\overset{\oplus}{N}(R^5)_2-$$

stehen.
Vorzugsweise stehen 50 bis 100 % aller in den Silanen der Formel (I) anwesenden Reste Z für einen bestimmten Rest der Formel (III) oder der Formel (IV), nämlich für einen Rest der Formel (III) oder der Formel (IV), in dem mindestens ein quaternisiertes, positiv geladenes Stickstoffatom vorliegt. Darunter ist ein positiv geladenes Stickstoffatom zu verstehen, an das 4 Kohlenstoffatome gebunden sind. Reste der Formel (III) oder der Formel (IV), in denen ein oder mehrere quaternisierte Stickstoffatome anwesend sind, enthalten eine oder mehrere zweiwertige Einheiten

$$-\overset{\oplus}{N}(R^5)_2-$$

oder einwertige Einheiten

$$-\overset{\oplus}{N}(R^5)_3.$$

Es ist bevorzugt, wenn in den Resten Z alle anwesenden Reste $R^2$ für $-(CH_2)_2-$, für $-CH_2-CH(CH_3)-CH_2-$ oder für $-(CH_2)3-$ stehen. Ferner ist es bevorzugt, wenn in den Resten Z alle anwesenden Reste $R^5$ unabhängig voneinander für einen linearen Alkylrest-mit 1 bis 6 Kohlenstoffatomen stehen.

Geeignete Silane der Formel (I) lassen sich nach allgemein bekannten Verfahren herstellen. Eine Reihe geeigneter Silane ist auf dem Markt erhältlich. Beispiele sind die Produkte DYNA-SYLAN ® AMMO (= 3-Aminopropyltrimethoxysilan), DYNASYLAN ® 1110 (= N-Methyl-3-aminopropyl-trimethoxysilan), DYNASYLAN ® AMEO (= 3-Amino-propyl-triethoxisilan), DYNA-SYLAN ® DAMO (= N-Aminoethyl-3-aminopropyl-trimethoxysilan) der Firma Hüls, Deutschland. Gegebenenfalls können diese Produkte, bevor sie zur Herstellung erfindungsgemäßer Zusammensetzungen verwendet werden, einer Quaternisierungsreaktion unterzogen werden, um quaternäre Stickstoffatome zu erzeugen.

Die Verbindungen der Formel (IIa), die ebenfalls als Ausgangsstoffe zur Herstellung erfindungsgemäßer Zusammensetzungen verwendet werden, sind Siloxane. In diesen Siloxanen der Formel (IIa) stehen alle anwesenden

Reste R unabhängig voneinander für einen Alkylrest mit 1 bis 4 Kohlenstoffatomen, vorzugsweise für einen Methylrest. Besonders bevorzugt ist es, wenn 70 bis 100 % aller anwesenden Reste R für $CH_3$ und die übrigen
0 — 30 % für
— $CH_2$-$CH_3$ stehen.
In den Siloxanen der Formel (IIa) können die einzelnen Einheiten -Si(R)(X)-O- und -Si$(R)_2$-Ound — Si(R)(D)— O— beliebig über die Siloxankette verteilt sein.
In Formel (IIa) stehen alle anwesenden Reste X für einen Rest der Formel (V)

$$-R^2 (OCHR^6—CHR^7)_e OR^4 \quad (V)$$

$R^2$ bedeutet hierbei einen linearen oder verzweigten Alkylenrest mit 2 bis 6 Kohlenstoffatomen. Alle Einheiten $OCHR^6$— $CHR^7$ sind Polyoxyethylen- oder Polyoxypropyleneinheiten. Das heißt, in jeder einzelnen dieser Einheiten steht einer der Reste $R^6$ und $R^7$ für Wasserstoff und der andere für Wasserstoff oder einen Methylrest.
e besitzt einen Wert im Bereich von 2 bis 25.
Alle in Einheiten der Formel (V) anwesenden Reste $R^4$ stehen unabhängig voneinander für Wasserstoff oder einen linearen oder verzweigten Alkylrest mit 1 bis 18 Kohlenstoffatomen. Vorzugsweise stehen alle Reste $R^4$, die in Einheiten X der Formel (V) vorliegen, für Wasserstoff.

Alle in Siloxanen der Formel (IIa) anwesenden Reste Y stehen unabhängig voneinander für einen Rest R der oben genannten Bedeutung, für einen Rest Z der oben genannten Bedeutung, oder für einen Rest der Formel (VI), der Formel (VII), der Formel (VIII) oder der Formel (IX)

$$-R^2-CH(OR^1)-R \quad (VI)$$

$$-R^2-COOH \quad (VII)$$

$$-R^2-O-CH_2-B \quad (VIII)$$

$$-R^2-O-CH_2-CH(OH)(CH_2-\overset{\oplus}{N}(R^5)_2)_r(CH_2)_k-\overset{\oplus}{N}(R^5)_3 \quad (IX)$$

In diesen Formeln besitzen $R^1$ und $R^2$ die oben genannten Bedeutungen. Der Rest B steht für den einwertigen cyclischen Rest, der sich von Ethylenoxid durch Entfernen eines Wasserstoffatoms ableitet, oder für -$CH_2$-$CH_2$-OH oder für -CH(OH)-$CH_3$.
In Formel (IIa) steht a für eine Zahl von 0 bis 500.
In Formel (IIa) steht b für eine Zahl von 0 bis 2000.
In Formel (IIa) steht l für eine Zahl von 0 bis 0, 1•b.
Die Summe a + b muß einen Wert von 1 bis 2000 besitzen.
Ferner muß die Gesamtzahl der in den verwendeten Siloxanen der Formel (IIa) und der Formel (IIb) anwesenden Einheiten -Si(R)(X)-O- und Si$(R)_2$-O- das 10-fache bis 1000-fache der Gesamtzahl der in den verwendeten Siloxanen der Formel (IIa) anwesenden Einheiten $Y_3$Si-Obetragen. Dies ist erforderlich, damit die in erfindungsgemäßen Zusammensetzungen vorliegenden Polysiloxane einen Mindestwert für die Kettenlänge bzw. für die Anzahl der Si-Atome aufweisen. Aus der zuletzt genannten Forderung ergibt sich, dass bei der Umsetzung zusätzlich ein Siloxan der Formel (IIb) mitverwendet werden muß, wenn die Summe a + b in den verwendeten Siloxanen der Formel (IIa) kleiner ist als 20. Ohne die Mitverwendung eines Siloxans der Formel (IIb) würde nämlich in diesem Fall die Summe der anwesenden Einheiten — Si(R)(X)-Ound Si$(R)_2$-O- weniger betragen als das 10-fache der Anzahl der Einheiten $Y_3$Si-O- (denn in den Siloxanen der Formel (IIa) sind 2 Einheiten $Y_3$Si-O- anwesend).
Aber auch für den Fall, dass a + b einen Wert von 20 oder mehr besitzt, kann zusätzlich ein Siloxan der Formel (IIb) mitverwendet werden, um die Kettenlänge der gebildeten Polysiloxane zu erhöhen, wenn dies gewünscht wird. Nur wenn a + b = 2000 darf kein Siloxan der Formel (IIb) zusätzlich verwendet werden, denn sonst würde die Gesamtzahl

der Einheiten Si(R)(X)-O- und $Si(R)_2$-O- mehr als das 1000-fache der Anzahl der Einheiten $Y_3$Si-O- betragen.

Die Siloxane der Formel (IIa) können gegebenenfalls zusätzlich Einheiten der Formel

-Si(R)(D)-O-

enthalten. Die Gesamtzahl dieser Reste in einem Siloxan der Formel (IIa) besitzt einen Wert von 0 bis maximal 10 % der Anzahl der anwesenden Einheiten $-Si-(R)_2$-O- also einen Wert von 0 bis 0,1 •b.

Der Rest D ist ein Rest der Formel

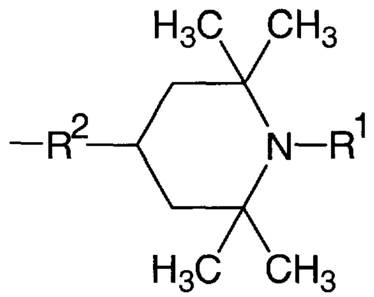

Hierin besitzen $R^1$ und $R^2$ die oben erwähnten Bedeutungen. Vorzugsweise sind alle anwesenden Reste $R^2$ Reste der Formeln

$-(CH_2)_2-$, $-(CH_2)_3-$

oder $-CH_2-CH(CH_3)-CH_2-$.

Siloxane, welche Einheiten der Formel -Si(R)(D)-O- enthalten, sind aus der EP-A 659 930 bekannt.

Eine bevorzugte Ausführungsform erfindungsgemäßer Zusammensetzungen ist dadurch gekennzeichnet, dass die Summe der Anzahl der in den verwendeten Siloxanen der Formel (IIa) und der Formel (IIb) anwesenden Einheiten $-Si(R)_2$-O- das 3-fache bis 50-fache der Anzahl der Einheiten —Si(R)(X)-O-, die in den Siloxanen der Formel (IIa) vorliegen, beträgt.

Vorzugsweise stehen in Formel (IIa) alle anwesenden Reste Y, die nicht für einen Rest der Formel (IX) stehen, für Z oder für $—CH_3$.

Bevorzugte Endgruppen $(Y)_3$Si-O- in Formel (IIa) weisen eine der folgenden Strukturen auf:

$(R)_2$ Si(Y)-O-,

insbesondere

$(CH_3)_2$Si(Y) -O-.

Besonders günstig ist es, wenn an beiden Kettenenden der Siloxane der Formel (IIa) Endgruppen der Formel

$(CH_3)_2$Si(Y)-O-

vorliegen, wobei an beiden Kettenenden die Reste Y unabhängig voneinander für $CH_3$, Z oder einen Rest der Formel (IX) stehen.

Die nach der beschriebenen Umsetzung in erfindungsgemäßen Zusammensetzungen enthaltenen Polyorganosiloxane liegen entweder als solche vor oder als Umsetzungsprodukte mit Säuren. Letzteres kann der Fall sein, wenn die Polysiloxane vor einer Umsetzung mit Säure ungeladene Stickstoffatome enthalten, die bei der Umsetzung mit Säure protoniert werden und dadurch eine positive Ladung erhalten. Die Zugabe von Säure kann nach der Umsetzung des Silans der Formel (I) mit Siloxan der Formel (IIa) erwünscht sein, um einen pH-Wert von weniger als 7

einzustellen. Umsetzungsprodukte der Polysiloxane mit Säuren sind Salze. Diese können in wäßrigen Dispersionen erfindungsgemäßer Zusammensetzungen beispielsweise dann vorliegen, wenn für die Anwendung der Dispersionen zur Textilausrüstung ein pH-Wert im sauren Bereich gewünscht und mittels Säurezugabe eingestellt wird.
Als Säuren für diesen Zweck eignen sich solche, die sich aus den oben genannten Anionen durch Hinzufügen eines Wasserstoffions ergeben, insbesondere Salzsäure, Schwefelsäuremonomethylester, Alkylsulfonsäure, Carbonsäuren, Benzol- und Toluolsulfonsäure. Die Säure kann vor oder nach der Dispergierung erfindungsgemäßer Zusammensetzungen in Wasser zugegeben werden.

Siloxane der Formel (IIa) können einen oder mehrere Reste Y enthalten, welche der Formel (IX) entsprechen. In diesen Resten besitzen $R^2$ und $R^5$ die bereits genannten Bedeutungen, t steht für die Zahl 0 oder 1. k besitzt den Wert 1, wenn t = 0 ist, und k steht für eine Zahl von 2 bis 6, wenn t = 1 ist.

Siloxane der Formel (IIa) können nach bekannten Verfahren hergestellt werden. Eine Reihe solcher Siloxane ist auf dem Markt erhältlich. Beispiele handelsüblicher Produkte sind

- Polydimethylsiloxan
- TEGOPREN ® 5878 (Fa. Goldschmidt, DE) = $(CH_3)_3Si\text{-}O\text{-}Si(CH_3)(X)\text{-}O\ Si(CH_3)_3$

wobei X für

$$-(CH_2)_3-(OCH_2CH_2)_h-OH$$

steht und h einen Wert von etwa 12 besitzt.

- X-22-160 AS (Shin-Etsu)
  = Polysiloxan, das an beiden Kettenenden jeweils $(CH_3)_2$ Si(Y)-O-Gruppen enthält, worin Y für R-CH($OR^1$)-$R^2$-steht
- KF 105 (Shin-Etsu)
  = Polysiloxan mit $(CH_3)_2$ Si(Y)-O-Endgruppen, worin Y für B-$CH_2$ O-$R^2$- steht und B der einwertige, von Ethylenoxid abgeleitete Rest ist.
- TEGOPREN ® 6924 (Firma Goldschmidt, DE)
  = Polysiloxan, das an beiden Kettenenden Gruppen der Formel $(CH_3)_2$ Si(Y)-O- aufweist,
  wobei Y in beiden Fällen für einen Rest der oben genannten Formel (IX) steht.
- X-22-161 AS
- KF-393
- KF-859

Diese 3 letzteren Produkte sind von Shin-Etsu erhältlich. Sie stellen Polydimethylsiloxane dar, in denen beide Endgruppen die Struktur

$$(CH_3)_2\ Si(Z)\text{-}O\text{-}$$

aufweisen, wobei Z jeweils ein Rest ist, welcher der oben und in Anspruch 1 genannten Formel (III) entspricht, worin L für -$NR^4$- steht und d den Wert 0 (X-22-161 AS) oder den Wert 1 (KF-393 und KF-859) hat.
Siloxane der Formel (IIa), welche sowohl Einheiten —Si(R)(X)-O- als auch Einheiten —$Si(R)_2$-Oenthalten, können hergestellt werden, indem man das oben genannte Trisiloxan TEGOPREN ® 5878 über eine bekannte Äquilibrierungsreaktion mit einem Polydimethylsiloxan in Gegenwart von Wasser unter alkalischer Katalyse, z.B. KOH-Katalyse, umsetzt. An Stelle des Polydimethylsiloxans oder zusätzlich dazu kann hierbei auch ein cyclisches Siloxan der oben genannten Art verwendet werden.
Es kann aber auch die Einführung von $Si(R)_2$-O-Einheiten erst im Rahmen der Herstellung erfindungsgemäßer Zusammensetzungen vorgenommen werden. Eine Möglichkeit besteht hierbei darin, von TEGOPREN ® 5878 auszugehen und dieses Produkt gleichzeitig mit einem Silan der Formel (I) und einem cyclischen Dimethylsiloxan [$Si(CH_3)_2$-

O$-]_z$ umzusetzen, wobei z vorzugsweise für 3 oder 4 steht. Hierbei kann ein offenkettiges Polydimethylsiloxan zusätzlich mitverwendet werden. Die Bedingungen für diese Umsetzung werden unten beschrieben.

Die Bedingungen für die Umsetzung der Silane der Formel (I) mit Siloxanen der Formel (IIa) sowie gegebenenfalls der Formel (IIb) sind dem Fachmann bekannt. Diese Umsetzung besteht in einer in der Silikonliteratur beschriebenen Äquilibrierungsreaktion. Die Äquilibrierung führt zur Insertion von Einheiten — $Si(OR^1)(Z)$, die aus Silanen der Formel (I) stammen, sowie gegebenenfalls von Einheiten der Formel $Si(R)_2$-O-, die aus Siloxanen der Formel (IIb) stammen, in die Kette der Siloxane der Formel (IIa).

Die Umsetzung (Äquilibrierung) wird normalerweise in Gegenwart eines Katalysators durchgeführt. Hierfür können alkalische oder saure Katalysatoren verwendet werden, wie sie aus der Silikonliteratur bekannt sind, z.B. Schwefelsäure, Phosphorsäure, Kaliumhydroxid oder Natriumhydroxid, aber auch Salze von Übergangsmetallen wie $SnCl_4$.

Die genannte Umsetzung muß in Gegenwart von Wasser durchgeführt werden, wenn nicht mindestens 2 der Reste $OR^1$ in dem verwendeten Silan der Formel (I) für eine Hydroxygruppe stehen. Die Anwesenheit von Wasser ist in diesem Fall nötig, damit 2 der Reste $OR^1$ aus Formel (I) in Form des entsprechenden Alkohols $R^1OH$ abgespalten werden können.

Die Umsetzung der Silane der Formel (I) mit den Siloxanen der Formel (IIa) und gegebenenfalls (IIb) kann unter bekannten Bedingungen durchgeführt werden. Normalerweise erfolgt sie bei einer Temperatur im Bereich von 110 bis 130°C.

Die genannte Umsetzung kann, wenn nicht, wie oben erwähnt, die Anwesenheit von Wasser erforderlich ist, in einem inerten organischen Lösungsmittel durchgeführt werden. Sie kann in diesem Fall aber auch ohne Lösungsmittel erfolgen.

In einer Reihe von Fällen ist es von Vorteil, wenn neben Silanen der Formel (I) auch Silane der Formel (X)

$$(R^1O)_2\,Si(R)Z \qquad (X)$$

zusätzlich mitverwendet werden. Hierbei besitzen R, $R^1$ und Z die oben genannten Bedeutungen. Die Mitverwendung solcher trifunktioneller Silane kommt vor allem dann in Betracht, wenn Vernetzungsreaktionen weitgehend oder vollständig unterdrückt werden sollen. Es kann auch mit einem molaren Überschuß von Silanen der Formel (X) gegenüber Silanen der Formel (I) gearbeitet werden.

Silane der Formel (X) sind auf dem Markt erhältlich. Beispiele sind die Produkte DYNASYLAN ® 1411 und DYNASYLAN ® 1505 der Firma Hüls, DE.

Vorzugsweise wird die Umsetzung der Silane der Formel (I) mit den Siloxanen der Formel (IIa) sowie gegebenenfalls zusätzlich Siloxanen der Formel (IIb) mit solchen Mengen an Ausgangsstoffen durchgeführt, dass das molare Verhältnis von Silan der Formel (I) zu Einheiten der Formel -$Si(R)_2$-O- im Bereich von 1 : 3 bis 1 : 400 liegt. Falls zusätzlich zu Siloxanen der Formel (IIa) weitere Ausgangsstoffe eingesetzt werden, welche Einheiten der Formel -Si $(R)_2$-O- enthalten, z.B. cyclische Dimethylsiloxane der Formel (IIb), so werden bei der Berechnung des oben genannten Verhältnisses die darin enthaltenen molaren Mengen an - $Si(R)_2$-O- zu den Mengen der -$Si(R)_2$-O- Einheiten addiert, die in den Verbindungen der Formel (IIa) enthalten sind.

Nach der Umsetzung der Silane der Formel (I) mit Siloxanen der Formel (IIa) sowie gegebenenfalls zusätzlich der Formel (IIb) müssen die gebildeten Polysiloxane nicht abgetrennt und gereinigt werden. Vielmehr können die erhaltenen erfindungsgemäßen Zusammensetzungen ohne weitere Aufarbeitung für die Textilausrüstung verwendet werden, vorzugsweise nachdem sie in wässrige Dispersionen überführt worden sind. Es sollte aber darauf geachtet werden, dass die Umsetzung so lange durchgeführt wird, dass die gebildeten erfindungsgemäßen Zusammensetzungen keine oder nur unwesentliche Restmengen an nicht umgesetzten Silanen der Formel (I) und der Formel (X) enthalten.

Die Erfindung wird nachstehend durch Ausführungsbeispiele veranschaulicht.

<u>Beispiel 1 (erfindungsgemäß)</u>

| | |
|---|---|
| 93 g eines Polydimethylsiloxans | ("Silikonöl AK 500", Firma Wacker, DE)<br>(= Siloxan der Formel (IIa)) |
| 4,4 g | $Si(CH_3)(OCH_3)_2(-CH_2CH_2CH_2NHCH_2CH_2NH_2)$<br>(= Silan der Formel (X)) |
| 0,84 g | $Si(OCH_3)_3(-CH_2CH_2CH_2NHCH_2CH_2NH_2)$ |

(= Silan der Formel (I))

wurden miteinander vermischt und das Gemisch auf 85°C erwärmt. Zu dem Gemisch gab man 2,1 g Wasser und 0,25 g 45 %ige wässrige Kaliumhydroxidlösung.
Anschließend wurde das Gemisch 30 Minuten unter Rühren bei 85°C gehalten. Dann erhitzte man auf 120°C und rührte bei dieser Temperatur 3 Stunden. Man erhielt ein trübes Gemisch einer Viskosität von 400 mPa.sec bei 20°C.

Beispiel 2 (erfindungsgemäß)

Beispiel 1 wurde wiederholt, wobei jedoch nur 46,5 g des Polydimethylsiloxans eingesetzt wurden. Die anderen 46,5 g wurden durch 46,5 Octamethylcyclotetrasiloxan (= Siloxan der Formel (IIb)) ersetzt.
Es wurde ein trübes Gemisch einer Viskosität von 450 mPa.sec (bei 20°C) erhalten.

Beispiel 3 (erfindungsegmäß)

Beispiel 1 wurde wiederholt, jedoch ohne Verwendung des dort genannten Polydimethylsiloxans. Stattdessen wurde von 90,6 g Octamethylcyclotetrasiloxan (= Siloxan der Formel (IIb)) und zusätzlich 2,1 g eines Trisiloxans (= Siloxan der Formel (IIa)) ausgegangen. Das verwendete Trisiloxan (TEGOPREN ® 5878) entsprach der Formel
$(CH_3)_3Si\text{-}O\text{-}Si(CH_3)(X)\text{-}O\ Si(CH_3)_3$
wobei X für einen Rest steht, der Polyoxyethylengruppen enthält und unter die Definition von Anspruch 1 fällt.
Es wurde ein trübes Gemisch einer Viskosität von 1000 mPa.sec (bei 20°C) erhalten.

Beispiel 4 (nicht-erfindungsgemäßes Vergleichsbeispiel)

Es wurde wie in Beispiel 1 gearbeitet, wobei 93,1 g Silikonöl AK 500 (= Siloxan der Formel (IIa)) und 5,25 g des in Beispiel 1 genannten Silans der Formel (X) eingesetzt wurden. Es wurde kein Silan der in Anspruch 1 genannten Formel (I) eingesetzt. Statt 2,1 g Wasser wurden nur 1,55 g verwendet.
Man erhielt eine trübe Mischung einer Viskosität von 300 mPa.sec (bei 20°C).

Beispiel 5 (nicht-erfindungsgemäßes Vergleichsbeispiel)

Es wurde wie in Beispiel 4 gearbeitet mit dem Unterschied, dass kein Silikonöl AK 500 verwendet wurde, sondern 90,6 g Octamethylcyclotetrasiloxan und 2,1 g des in Beispiel 3 genannten Trisiloxans. Es wurde kein Silan der Formel (I) eingesetzt.
Man erhielt ein trübes Gemisch einer Viskosität von 800 mPa.sec (bei 20°C).

Beispiele 1a und 3a bis 5a

Die Beispiele 1 a und 3a sind erfindungsgemäße Beispiele, die Beispiele 4a und 5a sind nichterfindungsgemäße Vergleichsbeispiele.
Jedes der bei den Beispielen 1 und 3 bis 5 erhaltenen Gemische wurde in eine wässrige Dispersion überführt, wobei gleichzeitig eine Quaternisierung von Stickstoffatomen mittels p-Toluolsulfonsäuremethylester durchgeführt wurde. Die gemäß Beispiel 1 a erhaltene wässrige Dispersion enthielt das Gemisch von Beispiel 1 usw.

Zur Herstellung der wässrigen Dispersionen wurde folgendermaßen vorgegangen:

Es wurde eine Mischung hergestellt, welche folgende Komponenten enthielt:

- 20 g eines Gemischs dreier unterschiedlicher ethoxilierter Alkohole (Dispergatorgemisch)
- 2,15 g $NaHCO_3$
- 7,9 g einer Mischung aus Propylenglykol und einem Phosphorsäuretriester
- 132 g Permutitwasser

Zu 5 Proben dieser Mischung gab man bei Raumtemperatur 29,8 g je eines der gemäß Beispiel 1 und 3 bis 5 erhaltenen Produkte. Die erhaltenen Gemische wurden bei Raumtemperatur gerührt, und es wurden unter Rühren 7,25 g p-Toluolsulfonsäuremethylester
zugegeben. Anschließend wurde auf 60°C erwärmt und 4 Stunden bei dieser Temperatur gerührt. Dann wurde 1 g Naformiat zugegeben.

In allen 4 Fällen erhielt man stabile, transparente, homogene Dispersionen.

Beispiele 1b und 3b bis 5b und 1c und 3c bis 5c

Es wurden wässrige Flotten 1b, 3b bis 5b und 1c, 3c bis 5c hergestellt. Die Flotten 1b, 3b bis 5b enthielten jeweils 30 g/l einer der Dispersionen 1a, 3a bis 5a, der Rest der Flotte bestand jeweils aus Wasser. Die Dispersionen 1c, 3c bis 5c enthielten jeweils 30 g/l einer der Dispersionen 1a, 3a bis 5a, zusätzlich 5 g/l einer wässrigen Dispersion, welche 50 Gew% eines Wasserstoffmethylpolysiloxans ("H-Siloxan") enthielt, also eines Siloxans, in dem Si-H-Bindungen vorliegen. Daneben enthielten die Flotten 1c sowie 3c bis 5c noch 3g einer 50 %-igen wässrigen Lösung von $MgCl_2$ x 6 $H_2O$ und 3 ml/l 60 %ige wässrige Essigsäurelösung. Der Rest der Flotten 1c und 3c bis 5c bestand aus Wasser.

Mit den Flotten 1b, 3b bis 5b und 1c, 3c bis 5c wurden Gewebe aus 100 % Baumwolle ausgerüstet.

Ausrüstbedingungen:

- Applikation über Foulardierung
- Flottenaufnahme (= Gewichtszunahme des Gewebes nach Foulardierung und Abquetschen, bezogen auf nichtausgerüstetes Gewebe) jeweils etwa 100 %
- Trocknung: 10 Minuten bei 110°C

Bei den mit Flotten 1 c sowie 3c bis 5c ausgerüsteten Geweben wurde anschließend noch 5 Minuten lang eine Kondensation bei 150°C durchgeführt.

An einigen der so erhaltenen Gewebeproben wurden der Griff manuell beurteilt und die hydrophilen/hydrophoben Eigenschaften durch einen sogenannten "Tropfentest" bestimmt. Bei diesem Test wird ein Tropfen Wasser auf die Gewebeprobe aufgebracht und die Zeit (Eindringzeit) in Sekunden bestimmt, in welcher der Tropfen vollständig in das Gewebe eingedrungen ist. In der unten aufgeführten Tabelle bedeutet somit ein höherer Zahlenwert für die Hydrophobie eine höhere Hydrophobie.

An einigen der mit den genannten Flotten ausgerüsteten Geweben wurden sodann Griff beurteilt und hydrophile/hydrophobe Eigenschaften bestimmt, nachdem die Gewebeproben Waschvorgängen unterworfen worden waren. Die Wäschen wurden in einer Haushaltswaschmaschine unter Verwendung einer handelsüblichen tensidhaltigen Waschlösung durchgeführt. Jeweils eine Gewebeprobe wurde dabei einmal 1 Stunde bei 40°C gewaschen, jeweils eine andere Probe

5 mal je eine Stunde bei 40°C.

Aus dem Vergleich der Eigenschaften der nicht gewaschenen Gewebeproben mit denen der einmal gewaschenen bzw. fünfmal gewaschenen lassen sich Aussagen über die Permanenz dieser Eigenschaften gegenüber Waschvorgängen erhalten.

Die Tabelle 1 zeigt die mit den Flotten 1b und 3b bis 5b erhaltenen Ergebnisse, die Tabelle 2 die mit den Flotten 1c und 3c bis 5c erhaltenen Ergebnisse.

Tabelle 1

| | Griff | | Hydrophobie (Eindringzeit in sec) | |
|---|---|---|---|---|
| | ungewaschen | 1 mal gewaschen | ungewaschen | 5 mal gewaschen |
| Flotte 1b Baumwollgewebe | | etwas härter als ungewaschen | 38 | 49 |
| Flotte 3b Baumwollgewebe | | härter als ungewaschen | 44 | 54 |
| Flotte 4b Baumwollgewebe | | deutlich härter als ungewaschen | 6 | 0-1 |
| Flotte 5b Baumwollgewebe | | extrem hart, viel härter als ungewaschen | 13 | 0-1 |

Tabelle 2

| | Griff | | Hydrophobie (Eindringzeit in sec) | | |
|---|---|---|---|---|---|
| | ungewaschen | 1 mal gewaschen | ungewaschen | 1 mal gewaschen | 5 mal gewaschen |
| Flotte 1c Baumwollgewebe | sehr weich | weich | > 120 | > 120 | 57 |
| Flotte 3c Baumwollgewebe | weich | sehr weich | > 120 | > 120 | 55 |
| Flotte 4c Baumwollgewebe | etwas hart | hart | 45 | 9 | 2 |
| Flotte 5c Baumwollgewebe | weich | hart | 110 | 32 | 2 |

Es ist sinnvoll, die mit den Flotten 1b bzw. 1c erhaltenen Ergebnisse mit denen zu vergleichen, die mit den Flotten 4b bzw. 4c erhalten wurden, da in all diesen Fällen das Polysiloxan keine Polyoxyalkylengruppen enthielt.

Andererseits sollten die mit Flotten 3b bzw. 3c erhaltenen Ergebnisse mit denen verglichen werden, die mit den Flotten 5b bzw. 5c erhalten wurden (Polysiloxane mit Polyoxyalkylengruppen).

Aus den Tabellen 1 und 2 ist zu entnehmen, dass die prozentuale Änderung des Zahlenwerts für die Hydrophobie nach Waschvorgängen bei den erfindungsgemäßen Beispielen (Flotten) 1b und 1c geringer ist als bei den entsprechenden Vergleichsbeispielen 4b und 4c. Der Vergleich zwischen den erfindungsgemäßen Beispielen (Flotten) 3b und 3c einerseits und 5b und 5c andererseits ergibt ein analoges Resultat. Dies bedeutet, dass mit den erfindungsgemäßen Beispielen 1b, 1c, 3b, 3c eine bessere Permanenz der Effekte gegenüber Waschvorgängen erhalten wird als mit den Vergleichsbeispielen 4b, 4c, 5b und 5c.

Die Permanenz der Griffeigenschaften gegenüber Waschvorgängen ist, wie die Tabellen 1 und 2 zeigen, ebenfalls besser, wenn erfindungsgemäße Zusammensetzungen verwendet wurden (Beispiele 1b, 1c, 3b, 3c) als im Fall der Verwendung nicht-erfindungsgemäßer Zusammensetzungen (Vergleichsbeispiele 4b, 4c, 5b, 5c).

## Patentansprüche

**1.** Zusammensetzung, herstellbar durch Umsetzung eines Silans der Formel (I)

$$(R^1O)_3Si\text{-}Z \qquad \text{(Ià}$$

oder eines Gemischs solcher Silane
mit einem offenkettigen Siloxan der Formel (IIa)

$$Y_3Si\text{-}O\left[Si(R)(X)\text{-}O\right]_a\left[Si(R)_2\text{-}O\right]_b\left[Si(R)(D)\text{-}O\right]_l Si\,Y_3 \qquad \text{(IIa)}$$

wobei gegebenenfalls bei der Umsetzung zusätzlich ein cyclisches Siloxan der Formel (IIb) verwendet wird

$$\left[Si(R)_2\text{-}O\right]_z \qquad \text{(IIb)}$$

wobei z für eine Zahl von 3 bis 8, vorzugsweise für 3 oder 4 steht,
oder einem Gemisch solcher Siloxane der Formel (IIa) und gegebenenfalls der Formel (IIb)
wobei die einzelnen Einheiten -Si(R)(X)-O- und -Si(R)(D)-O- und
—$Si(R)_2$-O- beliebig über die Siloxankette des Siloxans der Formel (IIa) verteilt sein können,
wobei a eine Zahl von 0 bis 500 ist,
wobei b eine Zahl von 0 bis 2000 ist,
wobei die Summe a + b eine Zahl von 1 bis 2000 ist,
wobei l eine Zahl von 0 bis 0,1•b ist,
wobei die Gesamtzahl der in den verwendeten Siloxanen der Formel (IIa) und der Formel (IIb) anwesenden Einheiten -Si(R)(X)-O- und $Si(R)_2$-O- das 10-fache bis 1000-fache der Gesamtzahl der in den verwendeten Siloxanen der Formel (IIa) anwesenden Einheiten $Y_3$ Si-O- beträgt,
wobei D ein Rest der Formel

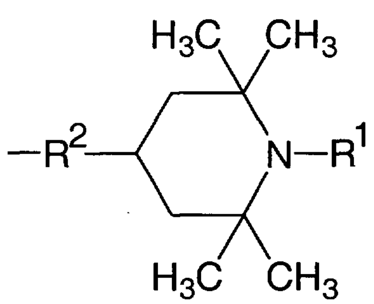

ist,
worin alle anwesenden Reste $R^1$ unabhängig voneinander für Wasserstoff oder einen Alkylrest mit 1 bis 8 Kohlenstoffatomen, vorzugsweise für $-CH_3$ oder $-CH_2-CH_3$, stehen,
wobei alle anwesenden Reste Z unabhängig voneinander für einen Rest der Formel (III) oder der Formel (IV)

$$-R^2 \left[ L \left( CH_2 \right)_c \right]_d NR^4_2 \qquad \text{(III)}$$

$$-R^2 \left[ L \left( CH_2 \right)_c \right]_d \overset{\oplus}{N}(R^5)_3 \qquad \text{(IV)}$$

stehen,
worin alle Reste $R^4$ unabhängig voneinander für Wasserstoff oder einen linearen oder verzweigten Alkylrest mit 1 bis 18 Kohlenstoffatomen stehen,
alle Reste $R^5$ unabhängig voneinander für einen linearen oder verzweigten Alkylrest mit 1 bis 18 Kohlenstoffatomen stehen,
c für eine Zahl von 2 bis 6 steht,
d für 0, 1 oder 2 steht,
wobei alle anwesenden zweiwertigen Reste L unabhängig voneinander für $-NR^4-$ oder für

$$-\overset{\oplus}{N}(R^5)_2-$$

stehen,
worin alle Reste $R^2$ unabhängig voneinander für einen linearen oder verzweigten Alkylenrest mit 2 bis 6 Kohlenstoffatomen stehen,
worin alle anwesenden Reste R unabhängig voneinander für einen Alkylrest mit 1 bis 4 Kohlenstoffatomen, vorzugsweise für $-CH_3$ stehen,
worin alle anwesenden Reste X für einen Rest der Formel (V) stehen,

$$-R^2 \left( OCHR^6-CHR^7 \right)_e OR^4 \qquad \text{(V)}$$

worin $R^2$ und $R^4$ die oben genannten Bedeutungen besitzen,
e eine Zahl von 2 bis 25 ist,
wobei in jeder Einheit $-OCHR^6-CHR^7-$ einer der Reste $R^6$ und $R^7$ für Wasserstoff und der andere für Wasserstoff oder eine Methylgruppe steht,
worin alle Reste Y unabhängig voneinander für R, Z oder für einen Rest der Formel (VI), der Formel (VII), der Formel (VIII) oder der Formel (IX) stehen

$$-R^2-CH(OR^1)-R \qquad \text{(VI)}$$

$$-R^2-COOH \qquad \text{(VII)}$$

$$-R^2\text{-O-}CH_2\text{-B} \qquad \text{(VIII)}$$

$$-R^2\text{-O-}CH_2\text{-CH(OH)-[-}CH_2\text{-}\overset{\oplus}{N}(R^5)_2\text{-]}_t\,(CH_2)_k\text{-}\overset{\oplus}{N}(R^5)_3 \qquad \text{(IX)}$$

worin B der einwertige, von Ethylenoxid abgeleitete cyclische Rest oder ein Rest der Formel $-CH_2-CH_2-OH$ oder der Formel $-CH(OH)-CH_3$ ist,
wobei t 0 oder 1 ist und k den Wert 1 besitzt, wenn t = 0 ist, und k für eine Zahl von 2 bis 6 steht, wenn t = 1 ist,
wobei für den Fall, dass weder in dem Silan der Formel (I) noch in dem Siloxan der Formel (II) ein quaternäres Stickstoffatom anwesend ist, im Anschluß an die Umsetzung eine Quaternisierungsreaktion durchgeführt wird, bei der mindestens eines der anwesenden Stickstoffatome quaternisiert wird,
wobei die Gegenionen zu den positiv geladenen Stickstoffatomen ausgewählt sind aus Chloridanionen, Alkylsulfatanionen, Alkylsulfonatanionen, Carboxylatanionen, Benzolsulfonatanionen und Toluolsulfonatanionen,
wobei gegebenenfalls nach Beendigung der Umsetzung das erhaltene Produktgemisch durch Zugabe einer Säure auf einen pH-Wert von weniger als 7 eingestellt wird.

2. Zusammensetzung nach Anspruch 1, **dadurch gekennzeichnet, dass** die Umsetzung mit solchen Mengen an Ausgangsstoffen durchgeführt wird, dass das molare Verhältnis von Silan der Formel (I) zu Einheiten der Formel $-Si(R)_2-O-$ im Bereich von 1 : 3 bis 1 : 400 liegt.

3. Zusammensetzung nach Anspruch 1 oder 2, **dadurch gekennzeichnet, dass** als Siloxan der Formel (IIa) ein Siloxan eingesetzt wird, das an beiden Kettenenden Reste der Formel

$$(CH_3)_2Si(Y)\text{-O-}$$

aufweist, bei denen die beiden Reste Y unabhängig voneinander für $CH_3$, Z oder einen Rest der Formel (IX) stehen.

4. Zusammensetzung nach einem oder mehreren der Ansprüche 1 bis 3, **dadurch gekennzeichnet, dass** 70 bis 100 % aller anwesenden Reste R für $CH_3$ und die übrigen 0 - 30 % für $-CH_2-CH_3$ stehen.

5. Zusammensetzung nach einem oder mehreren der Ansprüche 1 bis 4, **dadurch gekennzeichnet, dass** 50 bis 100 % aller anwesenden Reste Z eine Struktureinheit

$$-\overset{\oplus}{N}(R^5)_2-$$

und/oder eine Struktureinheit

$$-\overset{\oplus}{N}(R^5)_3$$

enthalten.

6. Zusammensetzung nach einem oder mehreren der Ansprüche 1 bis 5, **dadurch gekennzeichnet, dass** alle anwesenden Reste Y, die nicht für einen Rest der Formel (IX) stehen, für Z oder für $-CH_3$ stehen.

7. Zusammensetzung nach einem oder mehreren der Ansprüche 1 bis 6, **dadurch gekennzeichnet, dass** die Summe der Anzahl der in den verwendeten Siloxanen der Formel (IIa) und der Formel (IIb) anwesenden Einheiten -Si

$(R)_2$-O- das 3-fache bis 50-fache der Anzahl der Einheiten -Si(R)(X)-O-, die in den Siloxanen der Formel (IIa) vorliegen, beträgt.

**8.** Wässrige Dispersion, welche eine Zusammensetzung gemäß einem oder mehreren der Ansprüche 1 bis 7 enthält.

**9.** Verwendung einer wässrigen Dispersion nach Anspruch 8 zur Behandlung von Fasermaterialien.

**10.** Verwendung nach Anspruch 9, **dadurch gekennzeichnet, dass** die Fasermaterialien textile Flächengebilde in Form von Geweben oder Maschenware sind.

Europäisches Patentamt

# EUROPÄISCHER RECHERCHENBERICHT

Nummer der Anmeldung
EP 02 01 7823

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| A | US 4 062 999 A (TASHIRO MIKIO ET AL) 13. Dezember 1977 (1977-12-13)<br>* Beispiele 1,2 *<br>* Spalte 2, Zeile 19 - Spalte 2, Zeile 26 *<br>* Ansprüche * | 1-10 | C08L83/04<br>D06M13/46<br>D06M15/643<br>D06M15/647 |
| A | US 5 300 327 A (STARK-KASLEY LORI A ET AL) 5. April 1994 (1994-04-05)<br>* Ansprüche; Beispiele 2,3 *<br>* Spalte 1, Zeile 6 - Spalte 1, Zeile 10 * | 1-10 | |
| A | EP 0 643 090 A (PFERSEE CHEM FAB) 15. März 1995 (1995-03-15)<br>* Ansprüche; Beispiele 1,2 *<br>* Seite 14, Zeile 24 - Seite 14, Zeile 42 * | 1-10 | |
| | | | RECHERCHIERTE SACHGEBIETE (Int.Cl.7) |
| | | | C08L<br>D06M |

Der vorliegende Recherchenbericht wurde für alle Patentansprüche erstellt

| Recherchenort | Abschlußdatum der Recherche | Prüfer |
|---|---|---|
| MÜNCHEN | 15. Januar 2003 | Kolitz, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 01 7823

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2003

| Im Recherchenbericht angeführtes Patentdokument | Datum der Veröffentlichung | Mitglied(er) der Patentfamilie | Datum der Veröffentlichung |
|---|---|---|---|
| US 4062999 A | 13-12-1977 | JP 942333 C | 20-02-1979 |
| | | JP 50111393 A | 02-09-1975 |
| | | JP 53019716 B | 22-06-1978 |
| | | US 3980599 A | 14-09-1976 |
| | | BR 7500837 A | 02-12-1975 |
| | | DE 2505742 A1 | 14-08-1975 |
| | | ES 434629 A1 | 01-04-1977 |
| | | FR 2260654 A1 | 05-09-1975 |
| | | GB 1491747 A | 16-11-1977 |
| | | IT 1031683 B | 10-05-1979 |
| | | NL 7501650 A | 14-08-1975 |
| | | PH 11372 A | 08-11-1977 |
| US 5300327 A | 05-04-1994 | CA 2115622 A1 | 23-09-1994 |
| | | DE 69406166 D1 | 20-11-1997 |
| | | DE 69406166 T2 | 23-04-1998 |
| | | EP 0616990 A1 | 28-09-1994 |
| | | ES 2107747 T3 | 01-12-1997 |
| | | JP 6322319 A | 22-11-1994 |
| EP 0643090 A | 15-03-1995 | DE 4330967 A1 | 16-03-1995 |
| | | EP 0643090 A2 | 15-03-1995 |
| | | JP 7166064 A | 27-06-1995 |
| | | US 5562761 A | 08-10-1996 |

EPO FORM P0461

Für nähere Einzelheiten zu diesem Anhang : siehe Amtsblatt des Europäischen Patentamts, Nr.12/82